# EUROPEAN PATENT APPLICATION

(11) **EP 3 156 883 A1**
(43) Date of publication of application: **19.04.2017**
(21) Application number: 14894307.9
(22) Date of filing: 11.06.2014
(51) Int. Cl.: G06F 3/041, G06F 3/03

(54) **INPUT DEVICE, DOCUMENT INPUT SYSTEM, DOCUMENT INPUT METHOD, AND PROGRAM**

(71) Applicant: Pfu Limited, Ishikawa 929-1192 (JP)
(72) Inventor: DOJO, Go, Kahoku-shi, Ishikawa 929-1192 (JP); SANO, Hideo, Kahoku-shi Ishikawa 929-1192 (JP); NAKANO, Hitoshi, Kahoku-shi, Ishikawa 929-1192 (JP)
(74) Representative: Fenlon, Christine Lesley
(86) International application number: PCT/JP2014/065509
(87) International publication number: WO 2015/189942

(57) **Abstract**

An input device for use in input of data to a document screen displayed on a touch panel of a terminal device according to the present disclosure detects a touch operation performed on the touch panel in a detection unit. When the touch operation is detected, the input device transmits device information including at least a device ID of the input device to the terminal device.

## Description

### Field

The present disclosure relates to an input device, a document input system, a document input method, and a computer program product.

### Background

Conventionally, technologies for inputting characters with a touch pen have been disclosed.

There has been disclosed an electronic pen with a plurality of colors that enables a user to change display colors of a handwritten input figure and data easily and quickly (refer to Patent Literature 1).

There has also been disclosed a technology for inputting a desired line, a background, or the like to a touch panel of a confirming/editing monitor of an image- printing apparatus with a touch pen for line drawing, inputting a desired character, a graphic form, or the like to an image to be edited with a touch pen for a stamp, and erasing editing information written on the image to be edited with a touch pen for an eraser (refer to Patent Literature 2).

### Citation List

### Patent Literature

Patent Literature 1: JP-A-2005-182542
Patent Literature 2: JP-A-2003-158713

### Summary

### Technical Problem

The conventional touch pens (e.g., Patent Literature 1), however, do not retain attributes other than an input attribute like a format for each piece of input hardware.

In view of the disadvantage described above, the present disclosure aims to provide an input device, a document input system, a document input method, and a computer program product that can provide an environment where even beginners can readily enter data by classifying input contents with a plurality of pieces of input hardware having various attributes like writing implements in a pencil case used in a conventional operation on paper. Solution to Problem

An input device according to one aspect of the present disclosure is an input device for use in input of data to a document screen displayed on a touch panel of a terminal device. The input device includes a device information storage unit that stores device information including at least a device ID of the input device, a touch operation detecting unit that detects a touch operation performed on the touch panel in a detection unit, and a device information transmitting unit that transmits the device information to the terminal device when the touch operation is detected.

Further, a document input system according to another aspect of the present disclosure includes a plurality of input devices and a terminal device. The input devices each include a device information storage unit that stores device information including at least a device ID of the input devices, a touch operation detecting unit that detects a touch operation performed on a touch panel of the terminal device in a detection unit, and a device information transmitting unit that transmits the device information to the terminal device when the touch operation is detected. The terminal device includes a plural device information storage unit that stores plural device information corresponding to the device information on the input devices including the device ID, a use attribute of the input devices, and a format attribute of the input devices, a document displaying unit that displays a document screen on the touch panel, a touch operation detecting unit that detects the touch operation performed on the touch panel, a device information receiving unit that receives the device information transmitted from the input devices, and an input content retaining unit that retains an input content based on the plural device information corresponding to the device information received by the device information receiving unit and on the touch operation.

Further, a document input method according to still another aspect of the present disclosure is executed by an input device for use in input of data to a document screen displayed on a touch panel of a terminal device. The document input method includes a touch operation detecting step of detecting a touch operation performed on the touch panel in a detection unit, and a device information transmitting step of transmitting device information including at least a device ID of the input device to the terminal device when the touch operation is detected.

Further, a computer program product according to still another aspect of the present disclosure is a computer program having a non-transitory tangible computer readable medium including programmed instructions for causing, when executed by an input device for use in input of data to a document screen displayed on a touch panel of a terminal device, the input device to perform a document input method including a touch operation detecting step of detecting a touch operation performed on the touch panel in a detection unit, and a device information transmitting step of transmitting device information including at least a device ID of the input device to the terminal device when the touch operation is detected.

### Advantageous Effects of Disclosure

The present disclosure can control an operation with hardware used for input.

### Brief Description of Drawings

FIG. 1 is a hardware configuration diagram of an example of a configuration of a document input system according to the present embodiment;
FIG. 2 is a flowchart of an example of processing performed by the document input system according to the present embodiment;
FIG. 3 is a diagram of an example of device information according to the present embodiment;
FIG. 4 is a diagram of an example of operations performed by input devices according to the present embodiment;
FIG. 5 is a diagram of an example of an operation performed by an input device according to the present embodiment;
FIG. 6 is a diagram of an example of an operation performed by an input device according to the present embodiment;
FIG. 7 is a diagram of an example of an operation performed by an input device according to the present embodiment;
FIG. 8 is a diagram of an example of an operation performed by an input device according to the present embodiment;
FIG. 9 is a diagram of an example of an operation performed by an input device according to the present embodiment;
FIG. 10 is a diagram of an example of user authority for each input item according to the present embodiment. Description of Embodiments

Exemplary embodiments of an input device, a document input system, a document input method, and a computer program product according to the present disclosure are described below in greater detail with reference to the accompanying drawings. The embodiments are not intended to limit the present disclosure.

### Configuration of the present embodiment

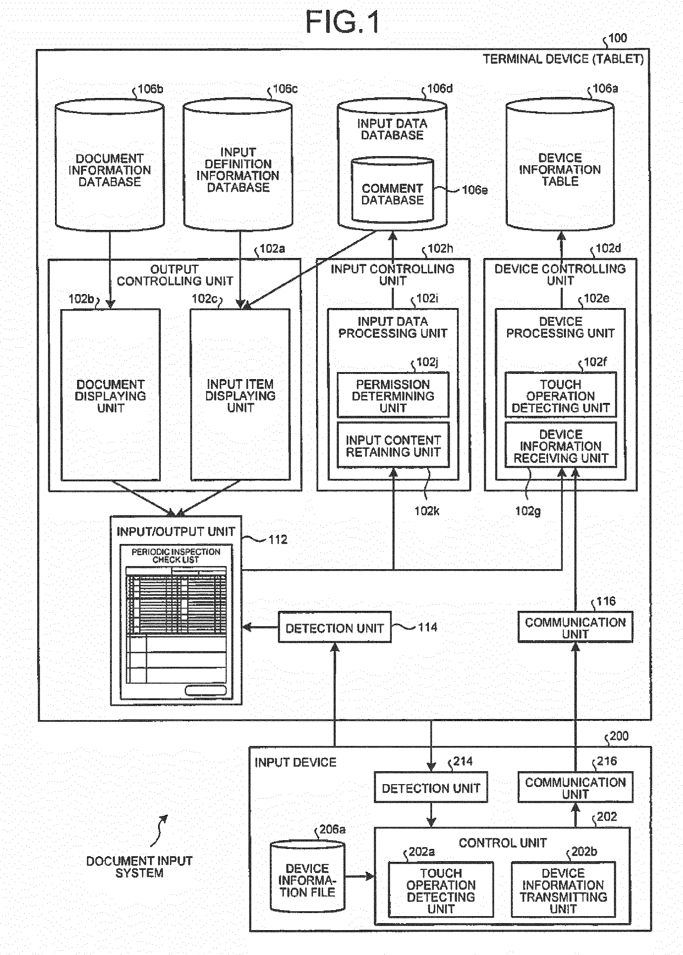

The following first describes an example of a configuration of a document input system according to an embodiment of the present disclosure with reference to FIG. 1. Next, processing and the like according to the present embodiment are described in detail. The embodiment below simply exemplifies a document input system to embody the technical idea of the present disclosure and is not intended to limit the present disclosure to the document input system. The present disclosure is also applicable to a document input system according to another embodiment included in the claims.

The mode of functional distribution of a terminal device (tablet) 100 and an input device 200 in the document input system according to the present embodiment, for example, is not limited to the ones described below. The devices may be functionally or physically distributed or integrated by a predetermined unit within a range that they can provide the same advantageous effects and functions. FIG. 1 is a hardware configuration diagram of an example of a configuration of the document input system according to the present embodiment.

As shown in FIG. 1, the document input system according to the present embodiment mainly includes the terminal device (tablet) 100 and the input device 200 connected to each other in a communicable manner. Communications may be performed by various Near Field Communication systems like Bluetooth (registered trademark), an infrared communication system, or the like. Units in the document input system may be connected to one another in a communicable manner via a certain communication channel.

As shown in FIG. 1, the input device 200 mainly includes a control unit (processing unit) 202, a storage unit 206, a detection unit 214, and a communication unit 216. The input devices 200 may each have a shape of a ballpoint pen, a marker, an eraser, or the like corresponding to respective attributes. These units are connected to one another in a communicable manner via a certain communication channel.

The detection unit 214 is a detecting device that detects physical contact. The detection unit 214 may convert detection of physical contact into signals (digital signals).

The communication unit 216 is a communication device that transmits and receives information (signals) to and from an external device (e.g., the terminal device 100). The communication unit 216 may transmit information (signals) to an external device (e.g., the terminal device 100). The communication unit 216 may include a Bluetooth (registered trademark) module or the like.

The storage unit 206 stores any one, some, or all of various databases, tables, and files (e.g., a device information file 206a). The storage unit 206 is a storage unit and is any one or both of a memory like a random access memory (RAM) or a read only memory (ROM) and a solid state drive (SSD), for example. The storage unit 206 may record a computer program or the like that issues instructions to a central processing unit (CPU) and causes the CPU to perform various types of processing.

The device information file 206a out of the components of the storage unit 206 stores device information (device definition information) that defines the input device 200. The device information file 206a may store the device information including at least a device ID of the input device 200. The device information may further include a use attribute of the input device 200. The device information may further include a format attribute of the input device 200. The format attribute may be a color, a line width, or the like.

The device information may further include user information on a user of the input device 200. The user information may be compared with an input authority attribute relating to whether to permit input using the input device 200 in determination of whether to permit input to an input item using the input device 200. The input authority attribute may include the user information on the user permitted to input data. The use attribute may be an attribute for character input (for input), for description erasure, for authentication item input (for approval), for supplementary item input (for comments), or for handwritten input conversion (for handwriting recognition). The user may be a specific individual, a specific group, or all persons.

The control unit 202 is a CPU or the like that collectively controls the input device 200. The control unit 202 includes an internal memory that stores a control program, a program prescribing various processing procedures and the like, and necessary data. The control unit 202 performs information processing for performing various types of processing based on the programs.

The control unit 202 mainly includes a touch operation detecting unit 202a and a device information transmitting unit 202b.

The touch operation detecting unit 202a detects a touch operation in the detection unit 214. The touch operation detecting unit 202a may detect a touch operation in the detection unit 214 based on physical contact detected in the detection unit 214.

The device information transmitting unit 202b transmits the device information to the terminal device 100. The device information transmitting unit 202b may transmit the device information stored in the device information file 206a to the terminal device 100 when a touch operation in the detection unit 214 is detected. The communication unit 216 may transmit the device information to the terminal device 100 via the communication unit 216. The communication unit 216 may convert the device information into signals and transmit them to the terminal device 100 via the communication unit 216. In other words, the device information transmitting unit 202b may convert the device information into signals and control the communication unit 216 to transmit the signals to the terminal device 100.

As shown in FIG. 1, the terminal device 100 mainly includes a control unit 102, a storage unit 106, an input/output unit 112, a detection unit 114, and a communication unit 116. The present embodiment may further include an input/output interface (not shown) that connects the input/output unit 112 to the control unit 102, although it is not shown in FIG. 1. The terminal device 100 may further include a communication interface (not shown) and may be connected to an external device in a manner communicable with each other via the communication interface.

The communication interface is an interface connected to a communication device like any one or both of an antenna and a router connected to any one or both of a communication line and a telephone line. The communication interface may have a function to perform communication control between the terminal device 100 and a network. The communication interface may be a network interface card (NIC) or the like. These units are connected to one another in a communicable manner via a certain communication channel. The control unit 102 may control the input/output unit 112, the detection unit 114, the communication unit 116, the input/output interface, and the communication interface.

The input/output unit 112 performs input and output (I/O) of data. The input/output unit 112 may be any one, some, or all of a key input unit, a touch panel, a control pad (e.g., a touch pad and a game pad), a mouse, a keyboard, and a microphone, for example. The input/output unit 112 may be a display unit (e.g., a display, a monitor, or a touch panel made of liquid-crystals or organic EL) that displays a display screen of an application and the like. The input/output unit 112 may be an audio output unit (e.g., a speaker) that outputs audio information as audio. The input/output unit 112 according to the present embodiment may include at least a touch panel.

The input/output unit 112 functionally and conceptually includes the detection unit 114. The detection unit 114 is a detecting device that detects physical contact with the input/output unit (touch panel) 112. The detection unit 114 may convert detection of physical contact into signals (digital signals).

The communication unit 116 is a communication device that transmits and receives information (signals) to and from an external device (e.g., the input device 200). The communication unit 116 may receive information (signals) from an external device (e.g., the input device 200). The communication unit 116 may include a Bluetooth (registered trademark) module or the like.

The storage unit 106 stores any one, some, or all of various databases, tables, and files (e.g., a device information table 106a, a document information database 106b, an input definition information database 106c, and an input data database 106d). The storage unit 106 is a storage unit and is any one, some, or all of a memory, such as a RAM or a ROM, a fixed disc device like a hard disc, an SSD, a flexible disc, and an optical disc. The storage unit 106 records a computer program or the like that issues instructions to a CPU and causes the CPU to perform various types of processing.

The device information table 106a out of the components of the storage unit 106 stores device information (device definition information) that defines the input device 200. The device information file 206a may store plural device information, which is device information on a plurality of input devices 200 including device IDs, use attributes of the input devices 200, and format attributes of the input devices 200.

The device information may further include user information on a user of the input device 200. In other words, the device information table 106a may retain identifiers of the respective input devices 200 to be used and attributes corresponding thereto.

The document information database 106b stores document information. The document information may include form layout information. The form layout information may be a file having a fixed layout like an image file or a portable document format (PDF) file. The document information may include a document screen to be displayed on the input/output unit (touch panel) 112. The document screen may be a form layout screen. The form layout screen may be a screen having a fixed layout of a paper form (existing form).

The input definition information database 106c stores input definition information. The input definition information may include an input item. The input item may have an input authority attribute relating to whether to permit input using the input device 200 set for each input item. In other words, the input definition information may retain the input authority attributes for the respective input items that control whether to permit input using the input device 200 by being combined with the user information included in the device definition information.

The input definition information may be described in Extensible Markup Language (XML) that defines input of a text, a numerical value, and the like. The input definition information may include information indicating "at which position", "in what size", and "which type of" item is to be arranged in the input item. The input definition information, for example, may be information that defines a frame (object that shifts to an input mode when being touched) in which the input item is arranged.

The input data database 106d stores input data (input contents). The input data database 106d may store input data (input contents) input to the document screen by the input device 200. The input data database 106d may store input data (input contents) input to the input item by the input device 200. The input data database 106d functionally and conceptually includes a comment database 106e.

The comment database 106e stores comments (supplementary contents). The comment database 106e may store comments (supplementary contents) input using the input device 200 having a use attribute of an attribute for supplementary item input (for comments) separately from input contents (input data) input using the input device 200 having a use attribute other than the attribute for supplementary item input (for comments).

The control unit 102 includes a CPU or the like that collectively controls the terminal device 100. The control unit 102 includes an internal memory that stores a control program, a program prescribing various processing procedures and the like, and necessary data. The control unit 102 performs information processing for performing various types of processing based on the programs.

The control unit 102 mainly includes an output controlling unit 102a, a device controlling unit 102d, and an input controlling unit 102h.

The output controlling unit 102a performs output control on the input/output unit (touch panel) 112. The output controlling unit 102a functionally and conceptually includes a document displaying unit 102b and an input item displaying unit 102c.

The document displaying unit 102b displays the document screen. The document displaying unit 102b may display the document screen on the input/output unit (touch panel) 112. In other words, the document displaying unit 102b may display the form layout information (form layout screen) on the input/output unit (touch panel) 112. The document displaying unit 102b may display input data (input contents) input to the document screen via the input/output unit (touch panel) 112 on the document screen (in a manner superimposed on the document screen).

The input item displaying unit 102c displays an input item. The input item displaying unit 102c may display the input item on the document screen displayed on the input/output unit (touch panel) 112. The input item displaying unit 102c may display the input item on the form layout screen displayed on the input/output unit (touch panel) 112. In other words, the input item displaying unit 102c displays the input item on a layout of a paper form.

The input item superimposed and displayed on the document screen may have an input authority attribute relating to whether to permit input using the input device 200. The input item displaying unit 102c may display the input data (input contents) input to the input item via the input/output unit (touch panel) 112 on the input item (in a manner superimposed on the input item). In other words, when input data corresponding to the input item is present, the input item displaying unit 102c may display the data (a text or an image) in the frame.

The device controlling unit 102d controls an operation of each input device 200 based on the device information including at least the device ID (identifier) of the input device 200 transmitted (output) from the input device 200. The device controlling unit 102d includes a device processing unit 102e that performs processing on the input device 200. The device processing unit 102e functionally and conceptually includes a touch operation detecting unit 102f and a device information receiving unit 102g.

The touch operation detecting unit 102f detects a touch operation on the input/output unit (touch panel) 112. The touch operation detecting unit 102f may detect a touch operation on the input/output unit (touch panel) 112 based on physical contact detected in the detection unit 114.

The device information receiving unit 102g receives the device information transmitted from the input device 200. The device information receiving unit 102g may receive the device information transmitted from the input device 200 via the communication unit 116. The device information receiving unit 102g may convert signals received by the communication unit 116 into device information, thereby receiving the device information transmitted from the input device 200. The device information receiving unit 102g may store (retain) the received device information in the device information table 106a.

The input controlling unit 102h performs control on input performed by the input device 200. The input controlling unit 102h includes an input data processing unit 102i that performs input data processing. The input data processing unit 102i functionally and conceptually includes a permission determining unit 102j and an input content retaining unit 102k.

The permission determining unit 102j determines whether to permit input to an input item using the input device 200. The permission determining unit 102j may determine whether to permit input to the input item using the input device 200 by comparing the input authority attribute of the input item on which a touch operation is detected by the touch operation detecting unit 102f with the user information of the input device 200 that transmits the device information based on the device information transmitted from the input device 200 and the plural device information stored in the device information table 106a.

The input content retaining unit 102k retains (stores) input contents in the input data database 106d. The input content retaining unit 102k may retain (store), in the input data database 106d, the input contents (input data) based on the plural device information stored in the device information table 106a, which corresponds to the device information received by the device information receiving unit 102g, and on the touch operation detected by the touch operation detecting unit 102f.

When the permission determining unit 102j determines to permit the input, the input content retaining unit 102k may retain (store) input contents (input data) to the input item in the input data database 106d. The input content retaining unit 102k may retain (store) the input contents (input data) input using the input device 200 together with an electronic signature in the input data database 106d.

The input content retaining unit 102k may retain (store), in the input data database 106d, contents resulting from optical character recognition (OCR) conversion performed on the input contents (input data) input using the input device 200. When the use attribute of the input device 200 is an attribute for supplementary item input, the input content retaining unit 102k may retain (store) supplementary contents (comments) input using the input device 200 in the input data database 106d (comment database 106e) separately from the input contents (input data) input using the input device 200 having a use attribute other than the attribute for supplementary item input.

When the use attribute of the input device 200 is an attribute for authentication item input, the input content retaining unit 102k may retain (store) the input contents (input data) input using the input device 200 together with an electronic signature as irrevocable contents in the input data database 106d.

### Processing of the present embodiment

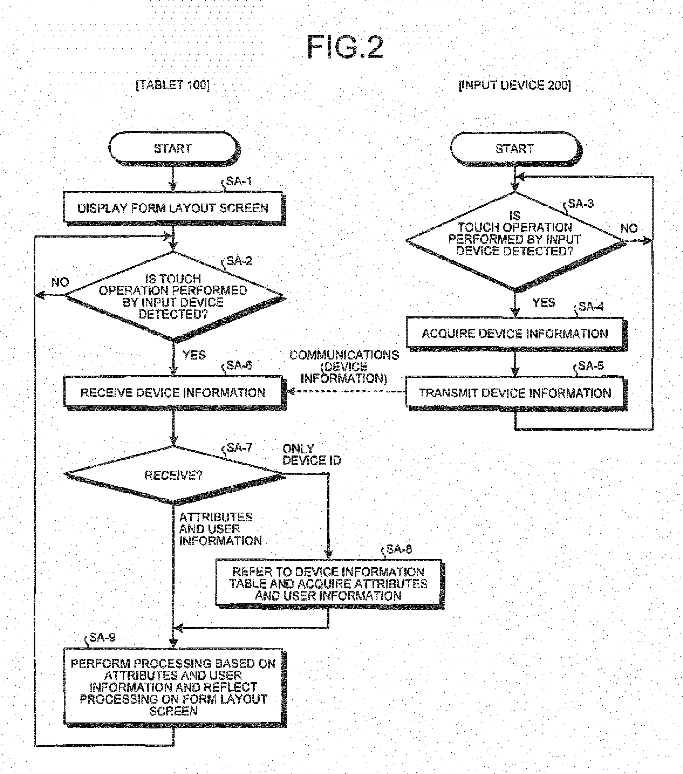

The following describes an example of processing performed by the document input system having the configuration described above with reference to FIGS. 2 to 10. FIG. 2 is a flowchart of an example of processing performed by the document input system according to the present embodiment.

As shown in FIG. 2, the document displaying unit 102b of the tablet 100 displays the form layout screen on the touch panel 112, and the input item displaying unit 102c displays an input item on the form layout screen displayed on the touch panel 112 (Step SA-1). The input item may have the input authority attribute relating to whether to permit input using the input device 200.

The touch operation detecting unit 102f of the tablet 100 determines whether a touch operation performed by the input device 200 on the touch panel 112 is detected (Step SA-2).

If the touch operation detecting unit 102f of the tablet 100 determines that no touch operation performed by the input device 200 on the touch panel 112 is detected (No at Step SA-2), the touch operation detecting unit 102f waits until a touch operation is detected.

By contrast, if the touch operation detecting unit 102f of the tablet 100 determines that a touch operation performed by the input device 200 on the touch panel 112 is detected (Yes at Step SA-2), the processing is shifted to Step SA-6.

The touch operation detecting unit 202a of the input device 200 determines whether a touch operation is detected in the detection unit 214 (Step SA-3).

If the touch operation detecting unit 202a of the input device 200 determines that no touch operation is detected in the detection unit 214 (No at Step SA-3), the touch operation detecting unit 202a waits until a touch operation is detected.

By contrast, if the touch operation detecting unit 202a of the input device 200 determines that a touch operation is detected in the detection unit 214 (Yes at Step SA-3), the processing is shifted to Step SA-4.

The device information transmitting unit 202b of the input device 200 acquires the device information including at least the device ID of the input device 200 stored in the device information file 206a (Step SA-4). The device information may further include the use attribute of the input device 200. The device information may further include the format attribute of the input device 200. The device information may further include the user information on the user of the input device 200.

The device information transmitting unit 202b of the input device 200 transmits the acquired device information including at least the device ID of the input device 200 to the terminal device 100 via the communication unit 216 (Step SA-5), and the processing is shifted to Step SA-3.

The device information receiving unit 102g of the tablet 100 receives the device information transmitted from the input device 200 via the communication unit 116 (Step SA-6). The device information receiving unit 102g may store the received device information in the device information table 106a.

The device controlling unit 102d of the tablet 100 determines what kind of information is included in the device information received by the device information receiving unit 102g (Step SA-7).

If the device controlling unit 102d of the tablet 100 determines that the device information received by the device information receiving unit 102g includes the attributes (the use attribute and the format attribute) of the input device 200 and the user information on the user of the input device 200 (attributes and user information are present at Step SA-7), the processing is shifted to Step SA-9.

By contrast, if the device controlling unit 102d of the tablet 100 determines that the device information received by the device information receiving unit 102g includes only the device ID (only device ID is present at Step SA-7), the device controlling unit 102d refers to the plural device information stored in the device information table 106a to acquire the attributes (the use attribute and the format attribute) of the input device 200 having the device ID and the user information on the user of the input device 200 having the device ID (at Step SA-8), and the processing is shifted to Step SA-9.

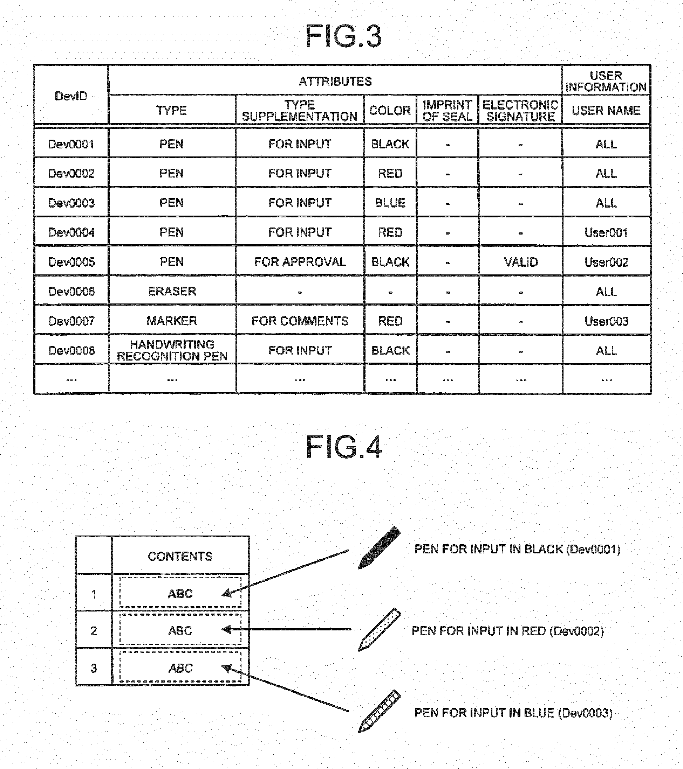

The following describes an example of information retained in the device information according to the present embodiment referring to FIG. 3. FIG. 3 is a diagram of an example of the device information according to the present embodiment.

As shown in FIG. 3, the plural device information, which is device information on a plurality of input devices 200 stored in the tablet 100 (device information table 106a), includes the following data in a manner associated with the device (Dev) IDs (e.g., Dev0001 to Dev0008) of the respective input devices 200: the attributes of the input devices 200 (e.g., the use attribute including a type, type supplementation, and addition of an electronic signature, and the format attribute including a color) and the user information (e.g., All indicating all persons and User 001 to 003 each indicating a specific individual).

The type may be a pen, an eraser (for description erasure), a marker, a handwriting recognition pen, or the like. The type supplementation may be for input (for character input), for approval (for authentication item input), for comments (for supplementary item input), or the like. The color may be black, red, blue, or the like. The input device 200 (device information file 206a) may store only the device ID or the device information of one record on the input device 200.

Referring back to FIG. 2, the input controlling unit 102h of the tablet 100 performs control processing on any one or both of input contents and comments input to any one or both of the form layout screen and the input item by the input device 200 based on the attributes (the use attribute and the format attribute) of the input device 200 and the user information. The document displaying unit 102b displays any one or both of the input contents and the comments input to the form layout screen on the form layout screen. The input item displaying unit 102c displays any one or both of the input contents and the comments input to the input item on the input item. The control processing is thus reflected on the form layout screen (Step SA-9), and the processing is shifted to Step SA-2. This processing may be ended by turning OFF the tablet 100 or terminating the application.

As described above, when a touch operation is performed, the input device 200 according to the present embodiment can notify the tablet 100 of the device information. When the notification touch operation is performed, the tablet 100 according to the present embodiment determines the received device information to perform an operation based on the attributes and the user information.

As described above, the present embodiment uses a plurality of input units having predefined input attributes, thereby classifying the attributes. The present embodiment can add user information to specification of the input attributes, thereby readily adding any one or both of information and authority corresponding to the user and tracing an inputter. The present embodiment can perform any one or both of input and display of supplementary information without affecting a form layout and input data and retain the supplementary information separately from the information on the form main part. The present embodiment thus can readily add or delete the supplementary information.

The following describes examples of operations performed by the input devices 200 according to the present embodiment. FIGS. 4 to 9 are diagrams of examples of operations performed by the input devices 200 according to the present embodiment.

As shown in FIG. 4, when data is input to input items 1 to 3 using a pen for input in black (Dev0001), a pen for input in red (Dev0002), and a pen for input in blue (Dev0003) serving as the input devices 200 corresponding to the device IDs of Dev0001 to Dev0003 shown in FIG. 3, the input item displaying unit 102c of the tablet 100 displays the input contents input to the input items 1 to 3 on the input items 1 to 3, respectively, displayed on the touch panel 112.

In other words, as shown in FIG. 4, when data is input to the input item 1 using the pen for input in black (Dev0001), the input item displaying unit 102c of the tablet 100 displays the input contents ("ABC" in black thin characters) input to the input item 1 on the input item 1 displayed on the touch panel 112.

As shown in FIG. 4, when data is input to the input item 2 using the pen for input in red (Dev0002), the input item displaying unit 102c of the tablet 100 displays the input contents ("ABC" in red thin characters) input to the input item 2 on the input item 2 displayed on the touch panel 112.

As shown in FIG. 4, when data is input to the input item 3 using the pen for input in blue (Dev0003), the input item displaying unit 102c of the tablet 100 displays the input contents ("ABC" in blue thin characters) input to the input item 3 on the input item 3 displayed on the touch panel 112.

As described above, the present embodiment enables the user to input data in a specified color to an input area. Because the user is common users (ALL), the person who writes the data cannot be identified. While the user conventionally needs to select a color in a toolbar or the like on the screen, the present embodiment enables the user to change the attributes by changing the input devices 200. The present embodiment thus facilitates the user's input.

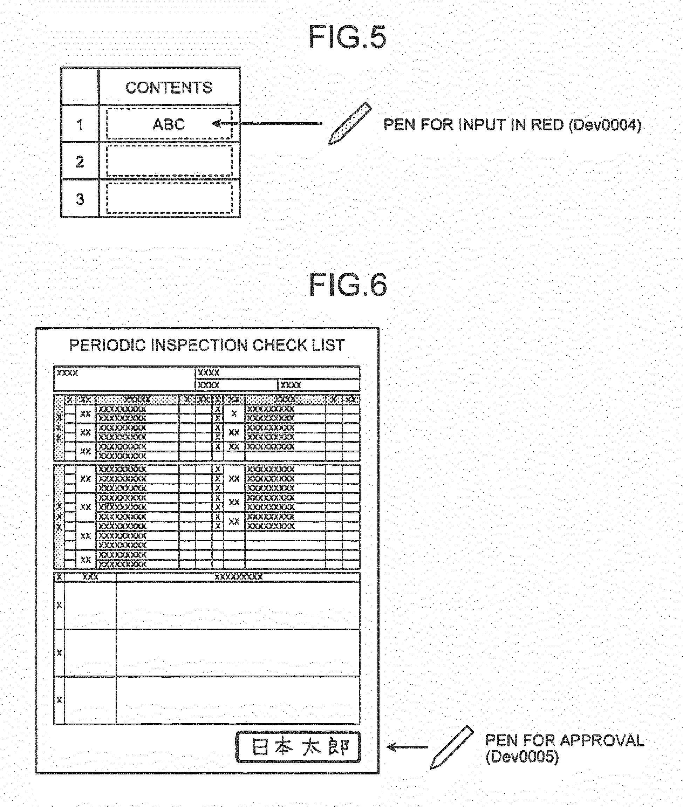

As shown in FIG. 5, when data is input to the input item 1 using a pen for input in red (Dev0004) serving as the input device 200 corresponding to the device ID of Dev0004 shown in FIG. 3, the input item displaying unit 102c of the tablet 100 displays the input contents ("ABC" in red thin characters) input to the input item 1 on the input item 1 displayed on the touch panel 112.

As described above, the present embodiment enables the user to input data in a specified color to an input area. Because the pen for input in red (Dev0004) has user information for identifying a specific person, user information of User001 is recorded in a manner associated with the input contents. As a result, the person who writes the data can be identified. Consequently, even if a plurality of persons enter data, the present embodiment can trace the person who writes the data.

As shown in FIG. 6, when data is input, using a pen for approval (Dev0005) serving as the input device 200 corresponding to the device ID of Dev0005 shown in FIG. 3, to an input item superimposed and displayed on the form layout screen displayed on the touch panel 112 and having an input authority attribute relating to whether to permit input using the input device 200, the permission determining unit 102j of the tablet 100 compares the input authority attribute of the input item with the user information of the pen for approval (Dev0005), thereby determining whether to permit input to the input item using the pen for approval (Dev0005).

As shown in FIG. 6, if the permission determining unit 102j determines to permit input to the input item using the pen for approval (Dev0005), the input item displaying unit 102c of the tablet 100 displays the input contents ("Nihon Taro" in black thin kanji characters) input to the input item on the input item displayed on the touch panel 112. The input content retaining unit 102k of the tablet 100 retains the input contents in the input data database 106d together with an electronic signature.

As described above, the present embodiment enables the user to input data in a specified color to an input area. Because the pen for approval (Dev0005) has user information for identifying a specific person, user information of User002 is recorded in a manner associated with the input contents. The present embodiment prevents the document from being changed after being input and adds an electronic signature thereto.

Because the present embodiment provides the input device 200 exclusively for an approver, the present embodiment can prescribe an operation performed after an approval signature is written (any one or both of whether to permit update after the signature is written and addition of an electronic signature or the like). The present embodiment may make inquiries to an external device like an authentication server to perform authentication when an approval signature is written by the input device 200.

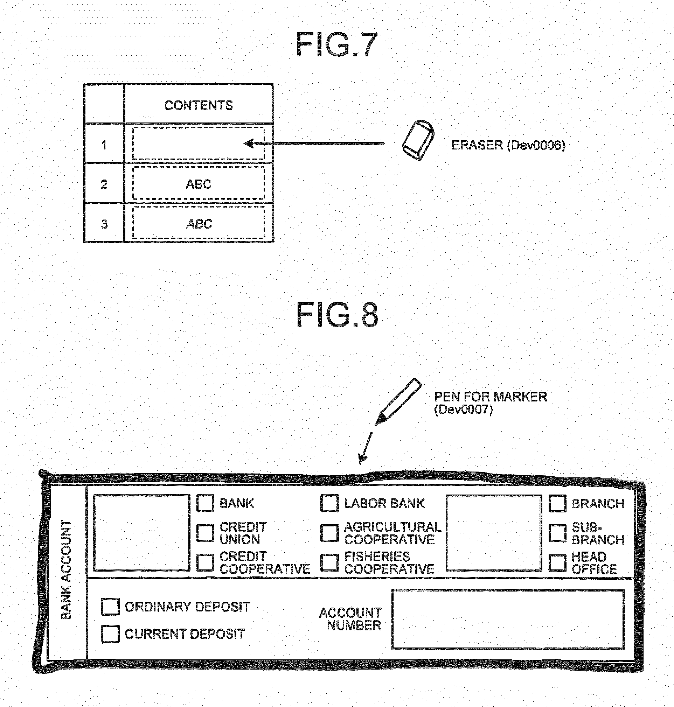

As shown in FIG. 7, when the input contents ("ABC" in black thin characters) input to the input item 1 using the pen for input in black (Dev0001) are rubbed using an eraser (Dev0006) serving as the input device 200 corresponding to the device ID of Dev0006 shown in FIG. 3, the input item displaying unit 102c of the tablet 100 erases the input contents ("ABC" in black thin characters) displayed on the input item 1 and displays the input item 1 on the touch panel 112.

Erasable information according to the present embodiment may vary depending on the authority. Because the common users (All) are specified in FIG. 7 (that is, All is defined as the user information on the eraser (Dev0006)), only the items input by the common users (ALL) can be erased.

While the user conventionally selects a tool of an eraser in a toolbar or the like on the screen, the present embodiment enables the user to erase data simply by changing the input devices 200. Furthermore, the present embodiment adds the user information to the device information, thereby performing control to prevent the user from erasing the contents written by others, for example.

As shown in FIG. 8, when data is input to the form layout screen displayed on the touch panel 112 using a pen for a marker (Dev0007) serving as the input device 200 corresponding to the device ID of Dev0007 shown in FIG. 3, the input item displaying unit 102c of the tablet 100 displays supplementary contents (a frame in red thick line) input to the form layout screen on the form layout screen displayed on the touch panel 112. The input content retaining unit 102k of the tablet 100 retains (stores) the supplementary contents in the comment database 106e separately from the input contents.

As described above, the present embodiment enables the user to input a matter to be attended or a portion to be highlighted as a comment. Because the comment according to the present embodiment is retained separately from the form main part, it is not output when the form is output. The present embodiment enables the user to write a surrounding line with a marker to urge an inputter to input data in the range, a matter to be attended like a signer, or the like. The present embodiment thus can enable a requester and an inputter to cooperate with each other similarly to an operation on paper.

While the user conventionally inputs data by selecting handwriting, a thick line, red, and the like in a toolbar or the like, the embodiment enables the user to select a marker simply by switching the input devices 200. While the user conventionally can input comments only to the portion predefined as an input item, the present embodiment enables the user to write a matter to be attended or the like, which is read only when data is entered, on the entire form layout screen because it can be saved as comments separately from the form main part.

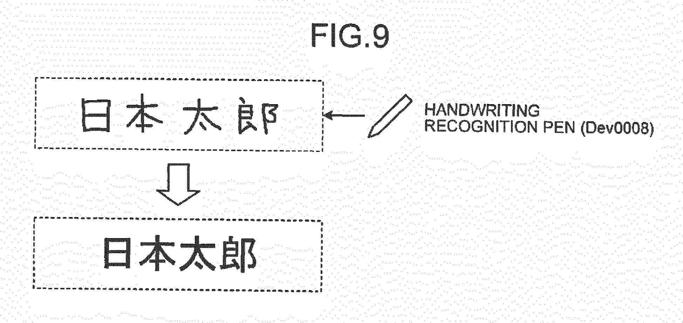

As shown in FIG. 9, when data is input to an input item using a pen for handwriting recognition (Dev0008) serving as the input device 200 corresponding to the device ID of Dev0008 shown in FIG. 3, the input item displaying unit 102c of the tablet 100 performs OCR conversion on the input contents ("Nihon Taro" in black thin kanji characters) input to the input item and displays the contents resulting from OCR conversion on the input item displayed on the touch panel 112. The input content retaining unit 102k of the tablet 100 retains the contents resulting from OCR conversion in the input data database 106d.

While handwritten contents are conventionally saved as an image and fail to be reused as data, the present embodiment converts the handwritten contents into characters, thereby reusing them as data. The present embodiment may perform OCR conversion on a handwritten character string while considering a stroke order and the like based on movement of the pen, thereby improving the conversion accuracy. In other words, the present embodiment may add detection of movement of a "stroke order", a "full stop", an "upward turn", and the like to the conventional OCR recognition, thereby improving the conversion accuracy.

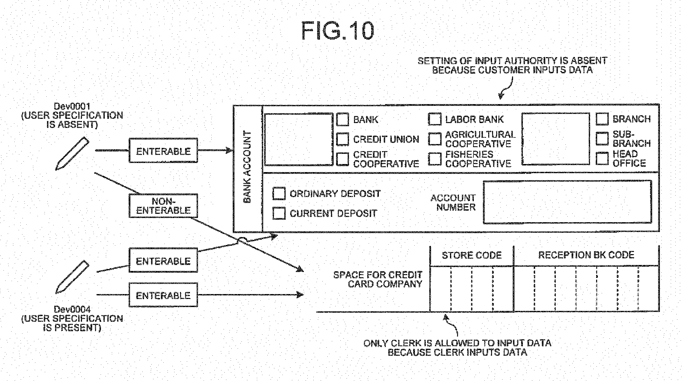

The following describes an example of user authority for each input item according to the present embodiment with reference to FIG. 10. FIG. 10 is a diagram of an example of user authority for each input item according to the present embodiment.

As shown in FIG. 10, the present embodiment allows input contents to be entered when they are input, using the pen for input in black (Dev0001) having the user information of ALL (user specification is absent), to an input item superimposed and displayed on a portion (bank account) in the form layout screen and having no input authority attribute.

By contrast, the present embodiment prevents input contents from being entered when they are input, using the pen for input in black (Dev0001) having the user information of ALL (user specification is absent), to an input item superimposed and displayed on a portion (space for the credit card company) in the form layout screen and having an input authority attribute (only the clerk is allowed to input). Consequently, the present embodiment can prevent input depending on the enterer, thereby preventing erroneous input.

As shown in FIG. 10, the present embodiment allows input contents to be entered when they are input, using the pen for input in red (Dev0004) having the user information of User001 (clerk), to an input item superimposed and displayed on a portion (bank account) in the form layout screen and having no input authority attribute.

The present embodiment also allows input contents to be entered when they are input, using the pen for input in red (Dev0004) having the user information of User001 (clerk), to an input item superimposed and displayed on a portion (space for the credit card company) in the form layout screen and having an input authority attribute (only the clerk is allowed to input).

As described above, the present embodiment allows a customer to input data to the input item of bank account information and allows only the clerk to input data to the input item of the space for the credit card company, thereby preventing erroneous input. Because the present embodiment includes a plurality of input devices 200, it can distinguish a pen used by anyone from a pen for an individual. The embodiment thus can distinguish a pen for the customer from a pen for the clerk or the like, thereby checking the person who enters the data.

As described above, the present embodiment performs form layout display processing and input item display processing and controls the operation by switching the hardware used for input. The present embodiment includes a plurality of pens on which a color, a line width, and the like are set in advance, input units on which attributes, such as an electronic signature, are set in advance, or the like. The present embodiment thus enables the user to input data or write a signature as if he/she makes a note on paper with pens in a plurality of colors.

The present embodiment includes a unit that deletes input contents like an eraser, thereby enabling the user to erase the input contents as if he/she uses an eraser on paper. The present embodiment also can recognize handwritten input and convert it into characters. The present embodiment includes pens having pieces of information on respective inputters, thereby controlling entry authorities for the respective items (for a customer, for a salesperson, or the like) and retaining an entry history (who writes the data or the like).

The present embodiment includes an input unit having attributes of inputting temporary data not required after the form is filled out, such as writing a surrounding line with a marker to urge an inputter to input data in a target range, writing a matter to be attended depending on the inputter like "please write a signature of Mr./Ms. XX". The present embodiment further includes a unit that retains the input contents as supplementary information separately from the information on the form main part.

The present embodiment enables the user to readily change attributes also in input on the touch panel as if he/she switches input tools (e.g., a pen or an eraser), which is a natural operation for the user who conducts business on paper. The present embodiment thus can make it less difficult for a person having low information technology (IT) literacy to input data to a paper form displayed on a mobile terminal.

Conventionally, to input data to a paper form displayed on a mobile terminal, a user needs to specify attributes, such as a color or a line width, on software in each input because the number of types of hardware used for the input (e.g., a pen) is usually one. As a result, it takes some time to input data. The present embodiment solves the conventional disadvantage described above.

Conventionally, handwritten instructions for an enterer (highlighting an input target with a marker, making a note of a matter to be attended for the input target, or the like), which are given in an operation on paper, fail to be given. As a result, it is difficult to specify an input range or add a matter to be attended when the input range varies depending on the customer. The present embodiment solves the conventional disadvantage described above.

### Other Embodiments

The embodiment of the present disclosure has been explained so far. Besides the foregoing embodiment, the present disclosure can also be carried out in various different embodiments within the scope of the technical idea described in the claims.

Out of the processes explained in relation to the embodiment, all or some of the processes explained as being automatically performed may be manually performed, or all or some of the processes explained as being manually performed may be automatically performed by publicly known methods.

Besides, the process steps, the control steps, the specific names, the information including registered data for the processes or parameters such as search conditions, the screen examples, or the database configurations described or shown herein or the drawings can be appropriately changed if not otherwise specified.

The constituent elements of the terminal device 100 and the input device 200 shown in the drawings are conceptual functions and do not necessarily need to be physically configured as shown in the drawings.

For example, all or any part of the processing functions included in the devices of the terminal device 100 and the input device 200, in particular, the processing functions performed by the control unit 102 or the control unit 202 may be implemented by the CPU or programs interpreted and executed by the CPU, or may be implemented by wired logic-based hardware. The programs including programmed instructions for causing a computer to execute methods according to the present disclosure described later are recorded in non-transitory computer-readable recording media, and are mechanically read by the terminal device 100 or the input device 200 as necessary. Specifically, the computer programs for giving instructions to the CPU to perform various processes in cooperation with an operating system (OS) are recorded in the storage unit 106, the storage unit 206, or the like such as a ROM or a hard disk drive (HDD). The computer programs are loaded into the RAM and executed, and constitute a control unit in cooperation with the CPU.

The computer programs may be stored in an application program server connected to the terminal device 100 or the input device 200 via an appropriate network, and may be entirely or partly downloaded as necessary.

The programs according to the present disclosure may be stored in computer-readable recording media or may be formed as program products. The "recording media" include any "portable physical media" such as a memory card, a USB memory, an SD card, a flexible disc, a magneto optical disc (MO), a ROM, an erasable programmable read only memory (EPROM), an electrically erasable programmable read only memory (EEPROM), a compact disc read only memory (CD-ROM), an MO, a digital versatile disc (DVD), and a Bluray (registered trademark) disc.

The "programs" constitute data processing methods described in an appropriate language or by an appropriate describing method, and are not limited in format such as source code or binary code. The "programs" are not limited to singly configured ones but may be distributed into a plurality of modules or libraries or may perform their functions in conjunction with another program typified by an OS. Specific configurations for reading the recording media by the devices according to the embodiment, specific procedures for reading the programs, or specific procedures for installing the read programs may be well-known configurations or procedures.

The various databases and others stored in the storage unit 106 and the storage unit 206 (the device information table 106a, the document information database 106b, the input definition information database 106c, the input data database 106d, the comment database 106e, and the device information file 206a) may be storage units such as any one, some, or all of a memory device such as a RAM or a ROM, a fixed disc device such as a hard disc, a flexible disc, and an optical disc, and may store any one, some, or all of various programs, tables, databases, and web page files for use in various processes and web site provision.

The terminal device 100 may be an information processing terminal such as a well-known personal computer and a well-known workstation, and an appropriate peripherals may be connected to the information processing terminal. The terminal device 100 may be embodied by providing the information processing terminal with software (including programs, data, and the like) for implementing the methods according to the present disclosure.

Further, the specific modes of distribution and integration of the devices are not limited to the ones shown in the drawings but all or some of the devices may be functionally or physically distributed or integrated by a predetermined unit according to various additions and the like or functional loads. That is, the foregoing embodiments may be carried out in any appropriate combination or may be selectively carried out.

### Industrial Applicability

As described above, the input device, the document input system, the document input method, and the computer program product according to the present disclosure can provide an environment where even beginners can readily enter data by classifying input contents with a plurality of pieces of input hardware like writing implements in a pencil case used in a conventional operation on paper. The input device, the document input system, the document input method, and the computer program product can be carried out in a lot of industrial fields, especially in an information processing field and are extremely useful.

### Reference Signs List

- 100: terminal device
- 102: control unit
- 102a: output controlling unit
- 102b: document displaying unit
- 102c: input item displaying unit
- 102d: device controlling unit
- 102e: device processing unit
- 102f: touch operation detecting unit
- 102g: device information receiving unit
- 102h: input controlling unit
- 102i: input data processing unit
- 102j: permission determining unit
- 102k: input content retaining unit
- 106: storage unit
- 106a: device information table
- 106b: document information database
- 106c: input definition information database
- 106d: input data database
- 106e: comment database
- 112: input/output unit
- 114: detection unit
- 116: communication unit
- 200: input device
- 202: control unit
- 202a: touch operation detecting unit
- 202b: device information transmitting unit
- 206: storage unit
- 206a: device information file
- 214: detection unit
- 216: communication unit

## Claims

1. An input device for use in input of data to a document screen displayed on a touch panel of a terminal device, the input device comprising:
a device information storage unit that stores device information including at least a device ID of the input device;
a touch operation detecting unit that detects a touch operation performed on the touch panel in a detection unit; and
a device information transmitting unit that transmits the device information to the terminal device when the touch operation is detected.

2. The input device according to claim 1, wherein the device information further includes a use attribute of the input device.

3. The input device according to claim 1 or 2, wherein the device information further includes a format attribute of the input device.

4. The input device according to any one of claims 1 to 3, wherein the device information further includes user information on a user of the input device.

5. The input device according to any one of claims 1 to 4, wherein an input content that is input using the input device is retained in the terminal device together with an electronic signature.

6. The input device according to claim 4, wherein
the document screen has an input item superimposed on the document screen and having an input authority attribute relating to whether to permit input using the input device, and
the user information is compared with the input authority attribute in determination of whether to permit input to the input item using the input device.

7. The input device according to any one of claims 1 to 6, wherein an input content that is input using the input device is subjected to optical character recognition (OCR) conversion and retained in the terminal device.

8. The input device according to claim 2, wherein, when the use attribute is an attribute for supplementary item input, a supplementary content that is input using the input device is retained in the terminal device separately from an input content that is input using the input device having the use attribute other than the attribute for supplementary item input.

9. The input device according to claim 2, wherein, when the use attribute is an attribute for authentication item input, an input content that is input using the input device is retained in the terminal device together with an electronic signature as an irrevocable content.

10. The input device according to claim 2, wherein the use attribute is an attribute for character input, for description erasure, for authentication item input, for supplementary item input, or for handwritten input conversion.

11. The input device according to claim 4, wherein the user is a specific individual, a specific group, or all persons.

12. The input device according to any one of claims 1 to 11, wherein the document screen is a form layout screen.

13. A document input system comprising:
a plurality of input devices; and
a terminal device,
the input devices each including:
a device information storage unit that stores device information including at least a device ID of the input devices;
a touch operation detecting unit that detects a touch operation performed on a touch panel of the terminal device in a detection unit; and
a device information transmitting unit that transmits the device information to the terminal device when the touch operation is detected, and
the terminal device including:
a plural device information storage unit that stores plural device information corresponding to the device information on the input devices including the device ID, a use attribute of the input devices, and a format attribute of the input devices;
a document displaying unit that displays a document screen on the touch panel;
a touch operation detecting unit that detects the touch operation performed on the touch panel;
a device information receiving unit that receives the device information transmitted from the input devices; and
an input content retaining unit that retains an input content based on the plural device information corresponding to the device information received by the device information receiving unit and on the touch operation.

14. A document input method executed by an input device for use in input of data to a document screen displayed on a touch panel of a terminal device, the document input method comprising:
a touch operation detecting step of detecting a touch operation performed on the touch panel in a detection unit; and
a device information transmitting step of transmitting device information including at least a device ID of the input device to the terminal device when the touch operation is detected.

15. A computer program product having a non-transitory tangible computer readable medium including programmed instructions for causing, when executed by an input device for use in input of data to a document screen displayed on a touch panel of a terminal device,
the input device to perform a document input method comprising:
a touch operation detecting step of detecting a touch operation performed on the touch panel in a detection unit; and
a device information transmitting step of transmitting device information including at least a device ID of the input device to the terminal device when the touch operation is detected.
